# EUROPEAN PATENT SPECIFICATION

(11) **EP 4 364 859 B1**
(45) Date of publication and mention of the grant of the patent: **31.12.2025**
(21) Application number: 23765736.6
(22) Date of filing: 14.02.2023
(51) Int. Cl.: B05C 11/10, B05C 9/04, B05C 1/08, B65G 27/18

(54) **FEEDING APPARATUS AND SUBSTRATE PROCESSING DEVICE**
ZUFÜHRVORRICHTUNG UND VORRICHTUNG ZUR VERARBEITUNG VON SUBSTRATEN
DISPOSITIF D'ALIMENTATION ET APPAREIL DE TRAITEMENT DE SUBSTRAT

(30) Priority: 09.03.2022 CN 202210231803
(43) Date of publication of application: 08.05.2024
(73) Proprietor: CONTEMPORARY AMPEREX TECHNOLOGY (HONG KONG) LIMITED, Hong Kong (HK)
(72) Inventor: XU, Yongqiang, Ningde, Fujian 352100 (CN); SHI, Junna, Ningde, Fujian 352100 (CN); CHEN, Yu, Ningde, Fujian 352100 (CN); LI, Keqiang, Ningde, Fujian 352100 (CN); WU, Zhiyang, Ningde, Fujian 352100 (CN); CHEN, Weifeng, Ningde, Fujian 352100 (CN); TANG, Jiabao, Ningde, Fujian 352100 (CN)
(74) Representative: Ziebig Hengelhaupt Intellectual Property Attorneys Patentanwaltskanzlei PartGmbB
(86) International application number: PCT/CN2023/075915
(87) International publication number: WO 2023/169158

(56) References cited:
- CN-A- 1 725 529
- CN-A- 101 632 972
- CN-A- 107 323 063
- CN-A- 109 075 340
- CN-A- 110 880 580
- CN-A- 113 102 160
- CN-A- 113 102 188
- CN-U- 202 807 738
- CN-U- 204 668 390
- JP-A- 2013 062 179
- JP-A- 2013 062 427

## Description

This application claims priority to Chinese Patent Application No. 202210231803.2, filed with the China National Intellectual Property Administration on March 9, 2022 and entitled "FEEDING APPARATUS AND SUBSTRATE PROCESSING DEVICE".

### TECHNICAL FIELD

This application relates to the field of battery technologies and more specifically to a feeding apparatus and a substrate processing device.

### BACKGROUND

Energy saving and emission reduction are crucial to the sustainable development of the automobile industry. Electric vehicles, with their advantages in energy conservation and environmental friendliness, have become an important part of the sustainable development of the automobile industry. For electric vehicles, battery technologies are an important factor related to the development of the electric vehicles.

Generally, a battery consists of a plurality of battery cells, and each battery cell includes an electrode assembly. The electrode assembly consists of a positive electrode plate and a negative electrode plate, and electrical energy is generated through migration of metal ions between the positive electrode plate and the negative electrode plate. During manufacturing of electrode plates, a feeding apparatus supplies a material for a coating process of a substrate, so that the substrate coated with the material becomes an electrode plate. Performance of the feeding apparatus directly affects quality of electrode plates. Therefore, how the performance of the feeding apparatus is improved has become a problem to be solved. CN204668390U discloses a lithium powder processing system of lithium ion battery pole piece, wherein lithium ion battery's pole piece has first surface and second surface, and this lithium powder processing system includes the first feed supplement device and the first roll -in device of following the pole piece direction of advance and setting gradually, first feed supplement device for first surface to the pole piece replenishes the lithium powder, first roll -in device for pole piece to supplying behind the lithium powder carries out the roll -in, lithium powder processing system still includes an on -line measuring device and the first online subsides mark device of following the pole piece direction of advance and setting gradually, an on -line measuring device and the low reaches of first online subsides mark device setting at first roll -in device, an on -line measuring device is connected with first online subsides mark device electricity.

### SUMMARY

Embodiments of this application provide a feeding apparatus and a substrate processing device, where the feeding apparatus has enhanced performance. The present invention is defined by independent claims. In the following, in case parts of the description and drawing referring to embodiments, which are not covered by the claims are not presented as embodiments of the invention, but as examples useful for understanding the invention.

According to a first aspect, a feeding apparatus is provided, where the feeding apparatus is configured to supply a material for a coating process of a substrate, so that the substrate coated with the material becomes an electrode plate; and the feeding apparatus includes:
a material conveying channel, where the material conveying channel includes a feeding inlet and a discharging outlet, the feeding inlet is closer to a first end of the material conveying channel than the discharging outlet, and the discharging outlet is closer to a second end of the material conveying channel than the feeding inlet, the first end and the second end being two opposite ends of the material conveying channel; and
a vibration generator disposed at the material conveying channel, where the vibration generator is configured to generate mechanical vibration to induce the mechanical vibration of the feeding apparatus, and the material entering the material conveying channel through the feeding inlet is conveyed to the discharging outlet under the action of the mechanical vibration and falls out of the feeding apparatus through the discharging outlet under the action of gravity.

In the embodiments of this application, the feeding apparatus includes the feeding inlet, the discharging outlet, and the material conveying channel in communication with the feeding inlet and the discharging outlet, and the material conveying channel is connected to the vibration generator. The vibration generator drives the material conveying channel to generate mechanical vibration, so that the material entering the material conveying channel through the feeding inlet is conveyed to the discharging outlet and falls out of the feeding apparatus through the discharging outlet under the action of gravity. The feeding apparatus discharges the material through mechanical vibration and therefore can improve discharging consistency thereof and make the material fall more evenly. Compared with a feeding apparatus using an ultrasonic knife, this feeding apparatus has better performance and can obtain electrode plates with higher quality.

An included angle between an amplitude direction of the mechanical vibration and the direction of gravity and an included angle between the amplitude direction of the mechanical vibration and a horizontal direction are both acute angles, where the horizontal direction is perpendicular to the direction of gravity, and the horizontal direction is from the first end to the second end.

In this technical solution, the amplitude direction of the material conveying channel is located between the direction of gravity and the horizontal direction, so that the material conveying channel can not only convey the material along the horizontal direction, but also make the material fall out of the feeding apparatus evenly when the material reaches the discharging outlet.

A value range of the included angle between an amplitude direction of the mechanical vibration and the direction of gravity is [20°, 70°]. For example, the included angle between the amplitude direction of the mechanical vibration and the direction of gravity is equal to 45°.

In an embodiment, the feeding apparatus further includes a hopper, where an outlet of the hopper is connected to the feeding inlet so that the material is added to the material conveying channel through the hopper. The hopper can store the material and supply it to the material conveying channel.

In an embodiment, the feeding apparatus further includes a baffle plate, where a thickness direction of the baffle plate is perpendicular to the direction of gravity, the baffle plate is disposed in a region around the discharging outlet of the material conveying channel, and the baffle plate is configured to block the material falling through the discharging outlet. The baffle plate can control the material in the horizontal direction and improve the falling uniformity of the material in a length direction of the substrate.

In an embodiment, the vibration generator is a pulse electromagnet.

In an embodiment, the material conveying channel is a cuboid, the feeding inlet is located at a third end of the material conveying channel, and the discharging outlet is located at a fourth end of the material conveying channel, where the third end and the fourth end are two opposite ends of the material conveying channel, and both the third end and the fourth end are configured to connect the first end and the second end.

In an embodiment, the material conveying channel is a cylinder, the first end and the second end are two bottom surfaces of the cylinder, and the feeding inlet and the discharging outlet are both located on a side surface of the cylinder.

According to a second aspect, a substrate processing device is provided, including: at least one feeding apparatus including the feeding apparatus according to any one of the first aspect or the embodiments of the first aspect; and at least one coating apparatus configured to apply a material supplied by the feeding apparatus onto a substrate.

In this embodiment, the feeding apparatus using mechanical vibration can improve falling consistency of the material and make the material fall more evenly. Compared with a feeding apparatus using an ultrasonic knife, the feeding apparatus using mechanical vibration has better performance. When applied to the coating process of the substrate, the feeding apparatus using mechanical vibration can make the material be applied more evenly onto a surface of the substrate, so as to obtain an electrode plate with higher quality.

In an embodiment, the at least one feeding apparatus includes a first feeding apparatus, where the first feeding apparatus is configured to drop the material onto a first surface of the substrate, the first surface being perpendicular to a thickness direction of the substrate. The at least one coating apparatus includes a first coating apparatus configured to apply the material dropped by the first feeding apparatus onto the first surface, where the material is used to form a first film material on the first surface.

The first feeding apparatus can cooperate with the first coating apparatus, and the first coating apparatus applies the material dropped by the first feeding apparatus onto the first surface of the substrate. The first feeding apparatus using mechanical vibration for discharging allows for more uniform falling amount of the material in a width direction of the substrate and better coating effect on the first surface of the substrate.

In an embodiment, the first coating apparatus includes: a first coating roller corresponding to a discharging outlet of the first feeding apparatus; and a second coating roller disposed opposite the first coating roller to apply the material dropped through the discharging outlet of the first feeding apparatus onto the first surface when the substrate passes between the first coating roller and the second coating roller, where the first surface faces toward the discharging outlet of the first feeding apparatus.

In this embodiment, the first coating apparatus has the first coating roller and the second coating roller disposed opposite each other, so that under extrusion of the first coating roller and the second coating roller, the material dropped by the first feeding apparatus is smoothed on the first surface of the substrate, so as to implement coating of the material on the first surface.

In an embodiment, the device further includes a first heating apparatus disposed downstream of the first coating apparatus, where the first heating apparatus is configured to heat up the material coated on the first surface, so as to obtain the first film material.

In this embodiment, the first heating apparatus can, for example, use infrared heating or hot oil medium heating to heat up the material coated on the first surface of the substrate, so that adhesion particles in the material melt, and then dry powder in the material is adhered together to form a flake coating with poor fluidity, that is, the first film material.

In an embodiment, the at least one feeding apparatus includes a second feeding apparatus, where the second feeding apparatus is configured to drop the material onto a roller surface of a first pressing roller. The at least one coating apparatus includes: a second coating apparatus configured to apply the material dropped by the second feeding apparatus onto the roller surface of the first pressing roller, where the material is used to form a second film material on the roller surface of the first pressing roller; and a rolling apparatus disposed downstream of the second coating apparatus, where the rolling apparatus includes the first pressing roller and a second pressing roller disposed opposite each other. The rolling apparatus is configured to: when the substrate passes between the first pressing roller and the second pressing roller, transfer the second film material from the roller surface of the first pressing roller and press-fit the second film material onto a second surface of the substrate under a pressure between the first pressing roller and the second pressing roller, where the second surface is perpendicular to a thickness direction of the substrate and disposed opposite a first surface, the first surface faces toward a roller surface of the second pressing roller, and the second surface faces away from the roller surface of the second pressing roller.

In this embodiment, the second feeding apparatus can cooperate with the second coating apparatus and the rolling apparatus, so that the material dropped by the second feeding apparatus is applied onto the roller surface of the first pressing roller in the rolling apparatus by the second coating apparatus to form the second film material. When the substrate passes between the first pressing roller and the second pressing roller, due to a difference in adhesion forces of the roller surface and substrate against the film material, the second film material is transferred from the roller surface of the first pressing roller and press-fitted to the second surface of the substrate under the pressure between the first pressing roller and the second pressing roller. The second feeding apparatus using mechanical vibration for discharging allows for more uniform falling amount of the material in a width direction of the roller surface and ultimately better coating effect on the second surface of the substrate.

In an embodiment, the rolling apparatus is configured to convey the substrate to between the first pressing roller and the second pressing roller using the second pressing roller, thereby simplifying a roller system structure.

In an embodiment, the device further includes a second heating apparatus configured to heat up the material coated on the roller surface of the first pressing roller, so as to obtain the second film material.

In this embodiment, the second heating apparatus can, for example, use infrared heating or hot oil medium heating to heat up the material coated on the roller surface of the first pressing roller, so that adhesion particles in the material melt, and then dry powder in the material is adhered together to form a flake coating with poor fluidity, that is, the second film material.

In an embodiment, the second heating apparatus includes a plurality of heating pipes arranged in an arc shape around the roller surface of the first pressing roller. The heating pipes being arranged in an arc shape around the roller surface of the first pressing roller can allow for uniform heating for the roller surface of the first pressing roller, thus improving uniformity of the first film material and guaranteeing consistency of finished products.

In an embodiment, the second coating apparatus includes a third coating roller corresponding to a discharging outlet of the second feeding apparatus and disposed opposite the first pressing roller to apply the material dropped through the discharging outlet of the second feeding apparatus onto the roller surface of the first pressing roller when the first pressing roller and the third coating roller rotate relative to each other.

In this embodiment, the second coating apparatus has the third coating roller and the first pressing roller disposed opposite each other, so that under extrusion of the third coating roller and the first pressing roller, the material dropped by the second feeding apparatus is smoothed on the roller surface of the first pressing roller, so as to implement coating of the material on the roller surface of the first pressing roller.

In an embodiment, the rolling apparatus is disposed downstream of the first coating apparatus, and the rolling apparatus is further configured to: when the substrate passes between the first pressing roller and the second pressing roller, press-fit the first film material onto the first surface under the pressure between the first pressing roller and the second pressing roller.

In this embodiment, when the substrate passes between the first pressing roller and the second pressing roller, the first film material previously coated on the first surface of the substrate is press-fitted to the first surface under the pressure between the first pressing roller and the second pressing roller, while the second film material previously coated on the roller surface of the first pressing roller is transferred to the second surface of the substrate and then press-fitted to the second surface of the substrate under the pressure between the first pressing roller and the second pressing roller. Because the first film material and the second film material are press-fitted to the first surface and second surface of the substrate at the same time, there is no need to wind and unwind repeatedly in the entire substrate processing, reducing complexity of the device, and the first surface and second surface of the substrate are subject to even pressure, reducing problems such as cracking caused by uneven stress and improving quality of finished products.

In an embodiment, the device further includes: an unwinding roller configured to release the substrate that is not processed; a traction roller disposed between the first coating apparatus and the unwinding roller and configured to provide traction for conveying the substrate; a winding roller configured to wind the substrate processed by the rolling apparatus; and a tension roller disposed between the first coating apparatus and the unwinding roller and configured to measure tension of the substrate in a conveying process, where the tension is used for adjusting a rotation speed of at least one of the unwinding roller, the winding roller, and the traction roller.

In this embodiment, the tension of the substrate in the conveying process is measured using the tension roller, so that the rotation speeds of the unwinding roller, the winding roller, the traction roller, and the like can be adjusted based on the magnitude of the tension of the substrate fed back by the tension roller, thus ensuring smooth conveying of the substrate, ensuring stable coating and rolling processes for the substrate, and improving the quality of finished products.

According to a third aspect, a substrate processing method is provided and applied to a substrate processing device, where the device includes at least one feeding apparatus and at least one coating apparatus. The method includes: supplying, by at least one feeding apparatus, a material to at least one coating apparatus; and applying, by the at least one coating apparatus, the material onto a substrate.

### BRIEF DESCRIPTION OF DRAWINGS

FIG. 1 is a schematic diagram of a feeding apparatus according to an embodiment of this application;
FIG. 2 is a schematic diagram of a feeding apparatus according to another embodiment of this application;
FIG. 3 is a schematic diagram of a feeding apparatus according to still another embodiment of this application;
FIG. 4 is a schematic diagram of a substrate processing device according to an embodiment of this application; and
FIG. 5 is a schematic diagram of a substrate processing device according to another embodiment of this application.

### DESCRIPTION OF EMBODIMENTS

The following describes the technical solutions in the embodiments of this application with reference to the accompanying drawings.

To make the objectives, technical solutions, and advantages of the embodiments of this application clearer, the following clearly describes the technical solutions in the embodiments of this application with reference to the accompanying drawings in the embodiments of this application. Apparently, the embodiments described are some rather than all embodiments of this application.

Unless otherwise defined, all technical and scientific terms used in this application shall have the same meanings as commonly understood by those skilled in the art to which this application relates. The terms used in the specification of this application are intended to merely describe the specific embodiments rather than to limit this application. The terms "include", "comprise", and any variations thereof in the specification and claims of this application as well as the foregoing description of drawings are intended to cover non-exclusive inclusions. In the specification, claims, or accompanying drawings of this application, the terms "first", "second", and the like are intended to distinguish between different objects rather than to indicate a particular order or relative importance. "Perpendicular" is not perpendicular in the strict sense but within an allowable range of error. "Parallel" is not parallel in the strict sense but within an allowable range of error.

Reference to "embodiment" in this application means that specific features, structures, or characteristics described with reference to the embodiment may be included in at least one embodiment of this application. The word "embodiment" appearing in various places in the specification does not necessarily refer to the same embodiment or an independent or alternative embodiment that is exclusive of other embodiments. It is explicitly or implicitly understood by persons skilled in the art that the embodiments described herein may be combined with other embodiments.

In the description of this application, it should be noted that unless otherwise specified and defined explicitly, the terms "mounting", "connection", "join", and "attachment" should be understood in their general senses. For example, they may refer to a fixed connection, a detachable connection, or an integral connection, and may refer to a direct connection, an indirect connection via an intermediate medium, or an internal communication between two elements. Persons of ordinary skills in the art can understand specific meanings of these terms in this application as appropriate to specific situations.

The term "and/or" in this application is only an associative relationship for describing associated objects, indicating that three relationships may be present. For example, A and/or B may indicate three cases: presence of only A; presence of both A and B; and presence of only B. In addition, the character "/" in this application generally indicates an "or" relationship between contextually associated objects.

In the embodiments of this application, like reference signs denote like components, and for brevity, in different embodiments, detailed descriptions of like components are not repeated. It should be understood that, as shown in the accompanying drawings, sizes such as thickness, length, and width of various components and sizes such as thickness, length, and width of integrated devices in the embodiments of this application are merely for illustrative purposes and should not constitute any limitations on this application.

In this application, "a plurality of" means two or more. Similarly, "a plurality of groups" means two or more groups, and "a plurality of pieces" means two or more pieces.

In the automobile industry environment in which conventional energy sources are used for power supply, environmental pollution problem is increasingly serious, so the active development of new energy vehicles can reduce the harm to the environment. For new energy vehicles, battery technologies are an important factor related to the development of the new energy vehicles.

The battery mentioned in this application is a single physical module that includes one or more battery cells for providing a higher voltage and capacity. For example, the battery mentioned in this application may include a battery module, a battery pack, or the like. A battery typically includes a box configured to enclose one or more battery cells. The box can prevent liquids or other foreign matter from affecting charging or discharging of the battery cell.

In an embodiment, the battery cell may include a lithium-ion secondary battery, a lithium-ion primary battery, a lithium-sulfur battery, a sodium-lithium-ion battery, a sodium-ion battery, a magnesium-ion battery, or the like. This is not limited in the embodiments of this application. Generally, the battery cell may also be referred to as a cell. The battery cell may be cylindrical, flat, cuboid, or of other regular or irregular shapes. The technical solutions in the embodiments of this application may be applied to battery cells of any shape.

The battery cell includes an electrode assembly and an electrolyte. The electrode assembly includes a positive electrode plate, a negative electrode plate, and a separator. The battery cell functions mainly relying on migration of metal ions between the positive electrode plate and the negative electrode plate. The positive electrode plate includes a positive electrode current collector and a positive electrode active substance layer. The positive electrode active substance layer is applied on a surface of the positive electrode current collector, and a current collector uncoated with the positive electrode active substance layer protrudes from the current collector coated with the positive electrode active substance layer and serves as a positive electrode tab. A lithium-ion battery is used as an example, for which, the positive electrode current collector may be made of aluminum and the positive electrode active substance may be lithium cobaltate, lithium iron phosphate, ternary lithium, lithium manganate, or the like. The negative electrode plate includes a negative electrode current collector and a negative electrode active substance layer. The negative electrode active substance layer is applied on a surface of the negative electrode current collector, and a current collector uncoated with the negative electrode active substance layer protrudes from the current collector coated with the negative electrode active substance layer and serves as a negative electrode tab. The negative electrode current collector may be made of copper, and the negative electrode active substance may be carbon, silicon, or the like. To allow a large current to pass through without any fusing, multiple positive electrode tabs are provided and stacked together, and multiple negative electrode tabs are provided and stacked together. The separator may be made of polypropylene (Polypropylene, PP), polyethylene (Polyethylene, PE), or the like. In addition, the electrode assembly may be a wound structure or a stacked structure, but the embodiments of this application are not limited thereto.

As mentioned above, both the surfaces of the positive electrode plate and the negative electrode plate are coated with active substance layers. During manufacturing of the electrode plate, an important procedure is to apply the active substance to the surface of the substrate, so as to obtain the positive electrode plate or negative electrode plate. In the coating process, corresponding materials are supplied by a feeding apparatus, so performance of the feeding apparatus directly affects quality of the electrode plates.

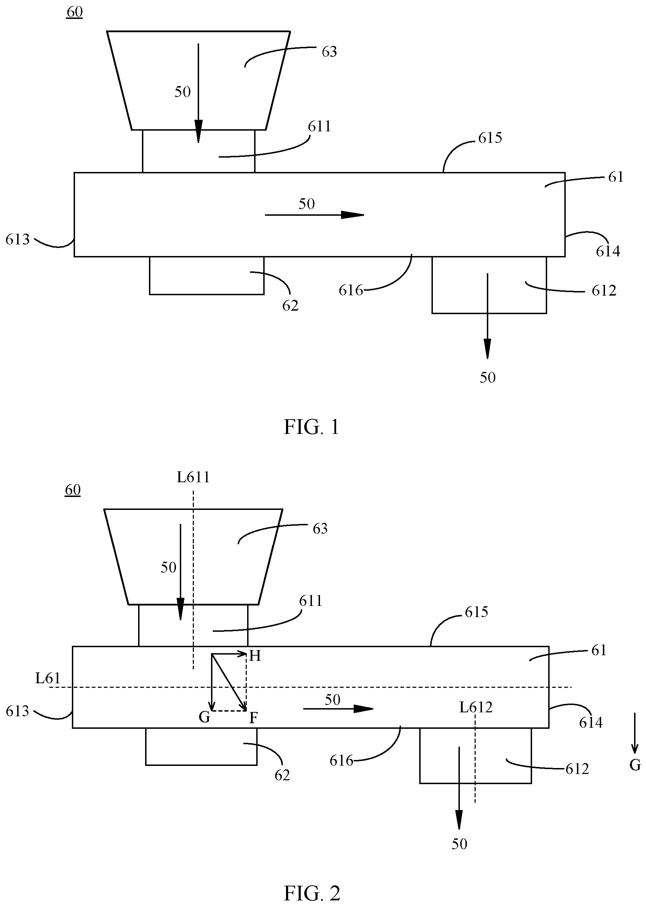

FIG. 1 shows a feeding apparatus according to an embodiment of this application. As shown in FIG. 1, the feeding apparatus 60 is configured to supply a material 50 for a coating process of a substrate 40 so that the substrate 40 coated with the material becomes an electrode plate; and the feeding apparatus 60 includes a material conveying channel 61 and a vibration generator 62.

The material conveying channel 61 includes a feeding inlet 611 and a discharging outlet 612, where the feeding inlet 611 is closer to a first end 613 of the material conveying channel 61 than the discharging outlet 612, and the discharging outlet 612 is closer to a second end 614 of the material conveying channel 61 than the feeding inlet 611, the first end 613 and the second end 614 being two opposite ends of the material conveying channel 61.

The vibration generator 62 is disposed at the material conveying channel 61, and the vibration generator 62 is configured to generate mechanical vibration to induce the mechanical vibration of the feeding apparatus 60. The material 50 entering the material conveying channel 61 through the feeding inlet 611 is conveyed to the discharging outlet 612 under the action of the mechanical vibration and falls out of the feeding apparatus 60 through the discharging outlet 612 under the action of gravity. The vibration generator 62 may be, for example, a pulse electromagnet, and is disposed below the material conveying channel 61. The pulse electromagnet makes the material conveying channel 61 generate mechanical vibration in an oblique direction through high-frequency opening and closing, and an included angle between an amplitude direction F of the mechanical vibration and the direction of gravity G and an included angle between the amplitude direction F of the mechanical vibration and a horizontal direction H are both acute angles. The vibrating generator 62 may alternatively be a mechanism in other forms that can cause the material conveying channel to vibrate. This is not limited in this application.

In this embodiment of this application, the feeding apparatus 60 includes the feeding inlet 611, the discharging outlet 612, and the material conveying channel 61 in communication with the feeding inlet 611 and the discharging outlet 612, and the material conveying channel 61 is connected to the vibration generator 62. The vibration generator 62 drives the material conveying channel 61 to generate mechanical vibration, so that the material 50 entering the material conveying channel 61 through the feeding inlet 611 is conveyed to the discharging outlet 612 and falls out of the feeding apparatus 60 through the discharging outlet 612 under the action of gravity. The feeding apparatus 60 discharges the material 50 through mechanical vibration, and therefore can improve discharging consistency thereof and make the material 50 fall more evenly. Compared with a feeding apparatus using an ultrasonic knife, the feeding apparatus 60 has better performance and can obtain electrode plates with higher quality.

According to the invention, an included angle between an amplitude direction F of the mechanical vibration and the direction of gravity G and an included angle between the amplitude direction F of the mechanical vibration and a horizontal direction H are both acute angles.

The horizontal direction H is perpendicular to the direction of gravity G, and the horizontal direction H is from the first end 613 of the material conveying channel 61 to the second end 614 of the material conveying channel 61.

The amplitude direction F of the material conveying channel 61 is located between the direction of gravity G and the horizontal direction H, so that the material conveying channel 61 can not only convey the material 50 along the horizontal direction H, but also make the material 50 fall out of the feeding apparatus 61 evenly when the material 50 reaches the discharging outlet 612.

A value range of the included angle between the amplitude direction F of the mechanical vibration and the direction of gravity is [20°, 70°]. For example, the included angle between the amplitude direction F of the mechanical vibration and the direction of gravity G and the included angle between the amplitude direction F of the mechanical vibration and the horizontal direction H are both 45°.

For example, as shown in FIG. 2, the discharging outlet 612 faces downward in the direction of gravity G, and a direction of the feeding inlet 611 is opposite to a direction of the discharging outlet 612. An axis L611 of the feeding inlet 611 is perpendicular to an axis L61 of the material conveying channel 61, an axis L612 of the discharging outlet 612 is perpendicular to the axis L61 of the material conveying channel 61, and the axis L611 of the feeding inlet 611 is parallel to the axis L612 of the discharging outlet 612. The amplitude direction F is located between the direction of gravity G and the horizontal direction H, and the material conveying channel 61 vibrates along the amplitude direction F, thus exerting a force on the material 50 in the amplitude direction F, so that the material 50 can be conveyed from the feeding inlet 611 to the discharging outlet 612 along the horizontal direction H and fall out of the feeding apparatus 60 through the discharging outlet 612 under the action of gravity.

Vibration intensity and vibration frequency of the vibration generator 62 may affect the discharging amount of the feeding apparatus 60. The falling amount of the material 50 can be adjusted by adjusting the vibration intensity, the vibration frequency, and the like, so that thickness, weight, and the like of electrode plates fall within ideal ranges. For example, the vibration frequency may be set to be less than or equal to 500 Hz, such as 50 Hz. For another example, the vibration intensity may be set to satisfy that the amplitude is less than or equal to 2.4 mm.

The feeding apparatus 60 discharges the material 50 based on mechanical vibration, and therefore can improve falling consistency of the material 50, especially falling consistency of the material 50 in the width direction of the substrate or the width direction of the roller surface, so as to obtain electrode plates with uniform thickness and flat surface. Generally, in the process of applying the material onto the surface of the substrate 40, the substrate 40 moves along the horizontal direction H, and the width direction of the substrate 40 is perpendicular to the horizontal direction H and the direction of gravity G.

In an embodiment, as shown in FIG. 1 and FIG. 2, the feeding apparatus 60 further includes a hopper 63, where an outlet of the hopper 63 is connected to the feeding inlet 611 of the material conveying channel 61 so that the material 50 is added to the material conveying channel 61 through the hopper 63. The hopper 63 can store the material and supply it to the material conveying channel 61, and capacity of the hopper 63 can be set according to actual requirements.

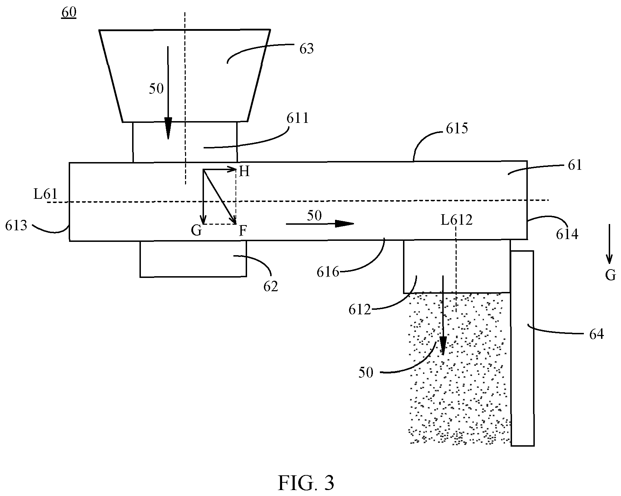

In an embodiment, as shown in FIG. 3, the feeding apparatus 60 further includes a baffle plate 64, where a thickness direction of the baffle plate 64 is perpendicular to the direction of gravity G, the baffle plate 64 is disposed in a region around the discharging outlet 612 of the material conveying channel 61, and the baffle plate 64 is configured to block the material 50 falling through the discharging outlet 612. The baffle plate 64 can control the material 50 in the horizontal direction H and therefore improves falling uniformity of the material 50 in a length direction of the substrate 40.

A form of the material conveying channel 61 is not limited in this application. In an embodiment, the material conveying channel 61 may be a cuboid, the feeding inlet 611 is located at a third end 615 of the material conveying channel 61, and the discharging outlet 612 is located at a fourth end 616 of the material conveying channel 61. As shown in FIG. 1 to FIG. 3, the third end 615 and the fourth end 616 are two opposite ends of the material conveying channel 61, and both the third end 615 and the fourth end 616 are configured to connect the first end 613 and the second end 614.

For example, the cuboid may be a hollow structure with a cavity in the horizontal direction H, and the feeding inlet 611 and the discharging outlet 612 are in communication with the cavity, so that the material 50 is conveyed from the feeding inlet 611 to the discharging outlet 612 through the cavity under the action of the mechanical vibration and falls through the discharging outlet 612.

For another example, the cuboid may alternatively be a flat plate, and the feeding inlet 611 and the discharging outlet 612 penetrate the flat plate in the direction of gravity G, so that the material 50 is conveyed from the feeding inlet 611 to the discharging outlet 612 along an upper surface of the flat plate under the action of the mechanical vibration and falls through the discharging outlet 612. Alternatively, the discharging outlet 612 may not be provided, instead, the material 50 is conveyed from the feeding inlet 611 along the upper surface of the flat plate to an edge of the flat plate close to the second end 614, so that when reaching the edge of the flat plate, the material 50 naturally falls off.

In another embodiment, the material conveying channel 61 is a cylinder, the first end 613 and the second end 614 are two bottom surfaces of the cylinder, and the feeding inlet 611 and the discharging outlet 612 are both located on a side surface of the cylinder.

For example, the cylinder may be a hollow structure with a cavity in the horizontal direction H, and the feeding inlet 611 and the discharging outlet 612 are in communication with the cavity, so that the material 50 is conveyed from the feeding inlet 611 to the discharging outlet 612 through the cavity and falls through the discharging outlet 612.

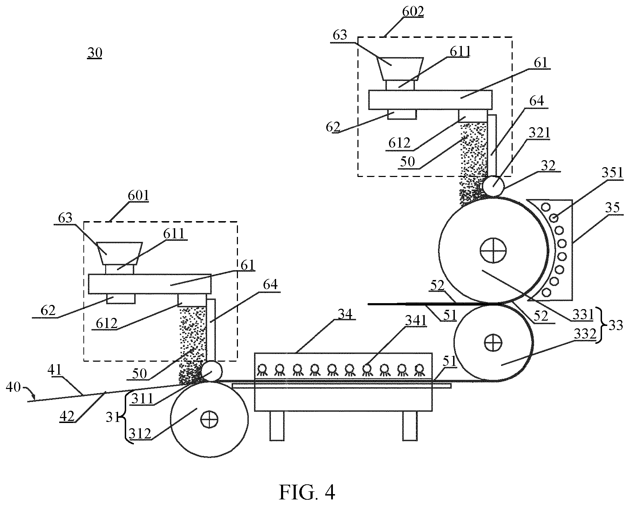

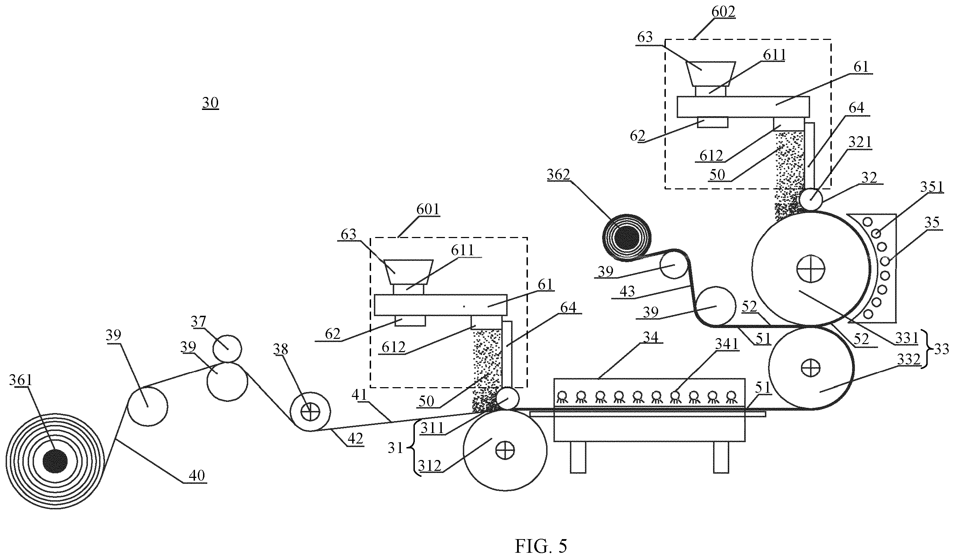

The foregoing feeding apparatus 60 can be applied to a substrate processing device, and the substrate processing device applies a material supplied by the feeding apparatus 60 onto a surface of a substrate to obtain an electrode plate. The following describes a substrate processing device provided in the embodiments of this application with reference to FIG. 4 and FIG. 5.

FIG. 4 shows a substrate processing device according to an embodiment of this application. As shown in FIG. 4, the substrate processing device 30 includes at least one feeding apparatus and at least one coating apparatus, where the at least one feeding apparatus includes, for example, the feeding apparatus 60 according to any of the foregoing embodiments of this application. The at least one coating apparatus is configured to apply a material 50 supplied by the feeding apparatus onto a substrate 40.

The feeding apparatus using mechanical vibration can improve falling consistency of the material and make the material fall more evenly. Compared with a feeding apparatus using an ultrasonic knife, the feeding apparatus using mechanical vibration has better performance. When applied to the coating process of the substrate, the feeding apparatus using mechanical vibration can make the material be applied more evenly onto a surface of the substrate, so as to obtain an electrode plate with higher quality.

In an embodiment, the at least one feeding apparatus 60 includes a first feeding apparatus 601, where the first feeding apparatus 601 is configured to drop the material 50 onto a first surface 41 of the substrate 40, the first surface 41 being perpendicular to a thickness direction of the substrate 40.

Correspondingly, the at least one coating apparatus may include a first coating apparatus 31, where the first coating apparatus 31 is configured to apply the material 50 dropped by the first feeding apparatus 601 onto the first surface 41, and the material is used to form a first film material 51 on the first surface 41.

The first feeding apparatus 601 is used in cooperation with the first coating apparatus 31, and the first coating apparatus 31 applies the material 50 dropped by the first feeding apparatus 601 onto the first surface 41 of the substrate 40. The first feeding apparatus 601 using mechanical vibration for discharging allows for more uniform falling amount of the material 50 in a width direction of the substrate 40 and better coating effect on the first surface 41 of the substrate 40.

As shown in FIG. 4, the first coating apparatus 31 may include, for example, a first coating roller 311 and a second coating roller 312. The first coating roller 311 corresponds to a discharging outlet 612 of the first feeding apparatus 601, for example, being located near the discharging outlet 612 of the first feeding apparatus 601 or near a baffle plate 64 of the first feeding apparatus 601. The second coating roller 312 is disposed opposite the first coating roller 311 to apply the material 50 dropped through the discharging outlet 612 of the first feeding apparatus 601 onto the first surface 41 of the substrate 40 when the substrate 40 passes between the first coating roller 311 and the second coating roller 312. The first surface 41 faces toward the discharging outlet of the first feeding apparatus 601.

Under extrusion of the first coating roller 311 and the second coating roller 312, the material 50 dropped by the first feeding apparatus 601 can be smoothed on the first surface 41 of the substrate 40, so as to implement coating of the material 50 on the first surface 41.

In an embodiment, the substrate processing device 30 further includes a first heating apparatus 34. As shown in FIG. 4, the first heating apparatus 34 is disposed downstream of the first coating apparatus 31, and the first heating apparatus 34 is configured to heat up the material 50 coated on the first surface 41, so as to obtain the first film material 51.

The first heating apparatus 34 can, for example, use infrared heating or hot oil medium heating to heat up the material 50 coated on the first surface 41 of the substrate 40, so that adhesion particles in the material 50 melt, and then dry powder in the material 50 is adhered together to form a flake coating with poor fluidity, that is, the first film material 51.

For example, as shown in FIG. 4, the first heating apparatus 34 includes a plurality of heating pipes, where the heating pipes are disposed on a side of the first surface 41 of the substrate 40. When the substrate 40 is conveyed from the first coating apparatus 31 to the first heating apparatus 34, the plurality of heating pipes heat up the material 50 coated on the first surface 41 of the substrate 40, so that the material 50 forms the first film material 51.

In an embodiment, the at least one feeding apparatus includes a second feeding apparatus 602, where the second feeding apparatus 602 is configured to drop the material 50 onto a roller surface of a first pressing roller 331.

Correspondingly, the at least one coating apparatus includes a second coating apparatus 32 and a rolling apparatus 33. The second coating apparatus 32 is configured to apply the material 50 dropped by the second feeding apparatus 602 onto the roller surface of the first pressing roller 331. The material 50 is used to form a second film material 52 on the roller surface of the first pressing roller 331.

The rolling apparatus 33 is disposed downstream of the second coating apparatus 32, the rolling apparatus 33 includes the first pressing roller 331 and a second pressing roller 332 disposed opposite each other, and the rolling apparatus 33 is configured to: when the substrate 40 passes between the first pressing roller 331 and the second pressing roller 332, transfer the second film material 52 from the roller surface of the first pressing roller 331 and press-fit the second film material 52 onto a second surface 42 of the substrate 40 under a pressure between the first pressing roller 331 and the second pressing roller 332. The second surface 42 is perpendicular to a thickness direction of the substrate and disposed opposite the first surface 41, the first surface 41 faces toward a roller surface of the second pressing roller 332, and the second surface 42 faces away from the roller surface of the second pressing roller 332.

The at least one coating apparatus may include the first coating apparatus 31, include the second coating apparatus 32 and the rolling apparatus 33, or include the first coating apparatus 31, the second coating apparatus 32, and the rolling apparatus 33. The first feeding apparatus 601 is configured to supply a material to the first coating apparatus 31, and the second feeding apparatus 602 is configured to supply a material to the second coating apparatus 32.

As shown in FIG. 4, when the second feeding apparatus 602 is used in cooperation with the second coating apparatus 32 and the rolling apparatus 33, the material 50 dropped by the second feeding apparatus 602 is applied onto the roller surface of the first pressing roller 331 in the rolling apparatus 33 by the second coating apparatus 32 to form the second film material 52. When the substrate 40 passes between the first pressing roller 331 and the second pressing roller 332, due to a difference in adhesion forces of the roller surface and substrate 40 against the film material, the second film material 52 is transferred from the roller surface of the first pressing roller 331 and press-fitted to the second surface 42 of the substrate 40 under the pressure between the first pressing roller 331 and the second pressing roller 332. The second feeding apparatus 602 using mechanical vibration for discharging allows for more uniform falling amount of the material 50 in a width direction of the roller surface and ultimately better coating effect on the second surface 42 of the substrate 40.

The second coating apparatus 32 may include, for example, a third coating roller 321. The third coating roller 321 corresponds to a discharging outlet of the second feeding apparatus 602 and disposed opposite the first pressing roller 331 to apply the material 50 dropped through the discharging outlet of the second feeding apparatus 602 onto the roller surface of the first pressing roller 331 when the first pressing roller 331 and the third coating roller 321 rotate relative to each other. In this way, the material 50 dropped by the second feeding apparatus 602 can be evenly applied onto the roller surface of the first pressing roller 331 using the third coating roller 321 and the first pressing roller 331 disposed opposite each other.

In an embodiment, as shown in FIG. 4, the rolling apparatus 33 is configured to convey the substrate 40 to between the first pressing roller 331 and the second pressing roller 332 using the second pressing roller 332, thereby simplifying a roller system structure. The first surface 41 of the substrate 40 faces toward the roller surface of the second pressing roller 332, and the second surface 42 of the substrate 40 faces away from the roller surface of the second pressing roller 332. In this way, when the substrate 40 passes between the first pressing roller 331 and the second pressing roller 332, the second surface 42 of the substrate 40 faces toward the roller surface of the first pressing roller 331, and the second film material 52 is transferred from the roller surface of the first pressing roller and press-fitted to the second surface 42 of the substrate 40 under the pressure between the first pressing roller 331 and the second pressing roller 332.

In an embodiment, as shown in FIG. 4, the substrate processing device 30 further includes a second heating apparatus 35. The second heating apparatus 35 is configured to heat up the material 50 coated on the roller surface of the first pressing roller 331, so as to obtain the second film material 52.

The second heating apparatus 35 can, for example, use infrared heating or hot oil medium heating to heat up the material 50 coated on the roller surface of the first pressing roller 331, so that adhesion particles in the material 50 melt, and then dry powder in the material 50 is adhered together to form a flake coating with poor fluidity, that is, the second film material 52.

For example, as shown in FIG. 4, the second heating apparatus 35 includes a plurality of heating pipes arranged in an arc shape around the roller surface of the first pressing roller 331. The plurality of heating pipes being arranged in an arc shape around the roller surface of the first pressing roller 331 can allow for uniform heating for the roller surface of the first pressing roller 331, thus improving uniformity of the first film material 51 and guaranteeing consistency of finished products.

In an embodiment, the rolling apparatus 33 is disposed downstream of the first coating apparatus 31, and the rolling apparatus 33 is further configured to: when the substrate 40 passes between the first pressing roller 331 and the second pressing roller 332, press-fit the first film material 51 onto the first surface 41 under the pressure between the first pressing roller 331 and the second pressing roller 332.

In this way, when the substrate 40 passes between the first pressing roller 331 and the second pressing roller 332, the first film material 51 previously coated on the first surface 41 of the substrate 40 is press-fitted to the first surface 41 under the pressure between the first pressing roller 331 and the second pressing roller 332, while the second film material 52 previously coated on the roller surface of the first pressing roller 331 is transferred to the second surface of the substrate 40 and then press-fitted to the second surface 42 of the substrate 40 under the pressure between the first pressing roller 331 and the second pressing roller 332. Because the first film material 51 and the second film material 52 are press-fitted to the first surface 41 and second surface 42 of the substrate 40 at the same time, there is no need to wind and unwind repeatedly in the entire substrate processing, reducing complexity of the device, and the first surface 41 and second surface 42 of the substrate 40 are subject to even pressure, reducing problems such as cracking caused by uneven stress and improving quality of finished products.

Specifically, after the first surface 41 of the substrate 40 passes through the first coating apparatus 31, the material 50 is applied onto the first surface 41; then the substrate 40 is conveyed to the first heating apparatus 34, and the material coated on the first surface 41 is heated by the first heating apparatus 34 to form the first film material 51 on the first surface 41, where the first surface 41 of the substrate 40 faces toward the roller surface of the second pressing roller 332; and when the substrate 40 passes through the second pressing roller 332 and reaches between the first pressing roller 331 and the second pressing roller 332, the first film material 51 is press-fitted to the first surface 41 under the pressure between the first pressing roller 331 and the second pressing roller 332. It can be understood that before the substrate 40 reaches the rolling apparatus 33, the material 50 is just spread or pre-pressed on the first surface 41 of the substrate 40, and only after the substrate 40 passes through the rolling apparatus 33, the material 50 is firmly press-fitted on the first surface 41, thus obtaining a finished product with satisfactory quality.

After the second surface 42 of the substrate 40 passes through the second coating apparatus 32, the material 50 is applied onto the roller surface of the first pressing roller 331, and after heated by the second heating apparatus 34, forms the second film material 52 on the roller surface of the first pressing roller 331, where the second surface 42 of the substrate 40 faces toward the roller surface of the first pressing roller 331; and then with the rotation of the first pressing roller 331, the second film material 52 on the roller surface of the first pressing roller 331 is conveyed to between the first pressing roller 331 and the second pressing roller 332, and the second film material 52 is press-fitted on the second surface 42 of the substrate 40 under the pressure between the first pressing roller 331 and the second pressing roller 332. It can be understood that before the second film material 52 reaches between the first pressing roller 331 and the second pressing roller 332, the material 50 is just spread or pre-pressed on the roller surface of the first pressing roller 331; and after the second film material 52 passes between the first pressing roller 331 and the second pressing roller 332, due to a difference in adhesion forces of the roller surface and substrate against the material 50, when the substrate 40 and the second film material 52 pass between the first pressing roller 331 and the second pressing roller 332 at the same time, the material 50 is transferred from the roller surface of the first pressing roller 331 to the second surface 42 of the substrate 40, and the second film material 52 is firmly press-fitted on the second surface 42 under the pressure between the first pressing roller 331 and the second pressing roller 332, thus obtaining a finished product with satisfactory quality.

In some embodiments, as shown in FIG. 5, the substrate processing device 30 may further include other rollers, so as to form a complete roller system.

For example, as shown in FIG. 5, the device 30 further includes an unwinding roller 361 and a winding roller 362. The unwinding roller 361 is configured to release the substrate 40 that is not processed, and the winding roller 362 is configured to wind the substrate 40 processed by the rolling apparatus 33.

For another example, as shown in FIG. 5, the device 30 further includes a traction roller 37. The traction roller 37 is disposed between the first coating apparatus 31 and the unwinding roller 361 and configured to provide traction for conveying the substrate 40.

For still another example, as shown in FIG. 5, the device 30 further includes a tension roller 38. The tension roller 38 is disposed between the first coating apparatus 31 and the unwinding roller 361 and configured to measure tension of the substrate 40 in a conveying process. The tension may be used for adjusting a rotation speed of at least one of the unwinding roller 361, the winding roller 362, and the traction roller 37.

The tension of the substrate 40 in the conveying process is measured using the tension roller 38, so that parameters such as the rotation speeds of the unwinding roller 361, the winding roller 362, the traction roller 37, and the like can be adjusted based on the magnitude of the tension fed back by the tension roller 38, thus ensuring smooth conveying of the substrate 40, ensuring stable coating and rolling processes for the substrate 40, and improving the quality of finished products.

In addition, for example, as shown in FIG. 5, the device 30 further includes at least one passing roller 39 disposed between the unwinding roller 361 and the first coating apparatus 31 and/or between the winding roller 362 and the rolling apparatus 33. The passing roller 39 is configured to change a conveying direction of the substrate 40. A position of the passing roller 39 may be arranged according to requirements of the roller system, so as to optimize the structure of the device 30 by changing the conveying direction of the substrate 40.

The number and position of the passing roller 39 are not limited in this application. In FIG. 5, two passing rollers 39 being disposed between the unwinding roller 361 and the first coating apparatus 31 and two passing rollers 39 being disposed between the winding roller 362 and the rolling apparatus 33 are used as an example.

The foregoing describes the substrate processing device 30 in the embodiments of this application. The following describes a substrate processing method 100 in the embodiments of this application. For those not described in detail, refer to the foregoing embodiments. The method 100 is applied to a substrate processing device 30. The substrate processing device 30 includes at least one feeding apparatus and at least one coating apparatus. The feeding apparatus may be, for example, the feeding apparatus 60 according to any one of the foregoing embodiments. The method 100 includes: supplying, by at least one feeding apparatus 60, a material to at least one coating apparatus; and applying, by the at least one coating apparatus, the material 50 onto a substrate 40.

In an embodiment, the at least one feeding apparatus 60 includes a first feeding apparatus 601, and the at least one coating apparatus includes a first coating apparatus 31. The feeding apparatus supplying the material to the coating apparatus includes: the first feeding apparatus 601 dropping the material 50 to a first surface 41 of the substrate 40, where the first surface 41 is perpendicular to a thickness direction of the substrate 40. The coating apparatus applying the material 50 supplied by the feeding apparatus onto the substrate 40 includes: the first coating apparatus 31 applying the material 50 dropped by the first feeding apparatus 601 onto the first surface 41, where the material is used to form a first film material 51 on the first surface.

In an embodiment, the first coating apparatus 31 includes a first coating roller 311 and a second coating roller 312, where the first coating roller 311 corresponds to a discharging outlet of the first feeding apparatus 601, and the second coating roller 312 is disposed opposite the first coating roller 311. The coating apparatus applying the material 50 supplied by the feeding apparatus onto the substrate 40 includes: controlling the substrate 40 to pass between the first coating roller 311 and the second coating roller 312 so as to apply the material 50 dropped through a discharging outlet of the first feeding apparatus 601 onto the first surface 41, where the first surface 41 faces toward the discharging outlet of the first feeding apparatus 601.

In an embodiment, the device 30 further includes a first heating apparatus 34 disposed downstream of the first coating apparatus 31, and the method 100 further includes: heating up, by the first heating apparatus 34, the material 50 coated on the first surface 41, so as to form a first film material 51.

In an embodiment, the at least one feeding apparatus includes a second feeding apparatus 602, and the at least one coating apparatus includes a second coating apparatus 32 and a rolling apparatus 33, where the rolling apparatus 33 is disposed downstream of the second coating apparatus 32, and the rolling apparatus 33 includes a first pressing roller 331 and a second pressing roller 332 disposed opposite each other. The feeding apparatus supplying the material to the coating apparatus includes: dropping, by the second feeding apparatus 602, the material 50 to a roller surface of the first pressing roller 331. The coating apparatus applying the material 50 supplied by the feeding apparatus onto the substrate 40 includes: applying, by the second coating apparatus 32, the material 50 dropped by the second feeding apparatus 602 onto the roller surface of the first pressing roller 331, where the material is used to form a second film material 52 on the roller surface of the first pressing roller 331; and controlling the substrate 40 to pass between the first pressing roller 331 and the second pressing roller 332 so as to transfer the second film material 52 from the roller surface of the first pressing roller 331 and press-fit the second film material 52 onto a second surface 42 of the substrate 40 under a pressure between the first pressing roller 331 and the second pressing roller 332, where the second surface 42 is perpendicular to a thickness direction of the substrate and disposed opposite the first surface 41, the first surface 41 faces toward a roller surface of the second pressing roller 332, and the second surface 42 faces away from the roller surface of the second pressing roller 332.

In an embodiment, the controlling the substrate 40 to pass between the first pressing roller 331 and the second pressing roller 332 includes: conveying, by the second pressing roller 332, the substrate 40 to between the first pressing roller 331 and the second pressing roller 332.

In an embodiment, the device 30 further includes a second heating apparatus 35, and the method 100 further includes: heating up, by the second heating apparatus 35, the material 50 coated on the roller surface of the first pressing roller 331, so as to form a second film material 52.

In an embodiment, the second heating apparatus 35 includes a plurality of heating pipes 351 arranged in an arc shape around the roller surface of the first pressing roller 331.

In an embodiment, the second coating apparatus 32 includes a third coating roller 321 corresponding to a discharging outlet of the second feeding apparatus 602 and disposed opposite the first pressing roller 331. The applying, by the second coating apparatus 32, the material 50 dropped by the second feeding apparatus 602 onto the roller surface of the first pressing roller 331 includes: controlling the first pressing roller 331 and the third coating roller 321 to rotate relative to each other, so as to apply the material 50 dropped through the discharging outlet of the second feeding apparatus 602 onto the roller surface of the first pressing roller 331.

In an embodiment, the rolling apparatus 33 is disposed downstream of the first coating apparatus 31, and the method 100 further includes: controlling the substrate 40 to pass between the first pressing roller 331 and the second pressing roller 332 so as to press-fit the first film material 51 onto the first surface 41 under the pressure between the first pressing roller 331 and the second pressing roller 332.

In an embodiment, the device 30 further includes an unwinding roller 361, a traction roller 37, a winding roller 362, and a tension roller 38, where the traction roller 37 is disposed between the first coating apparatus 31 and the unwinding roller 361, and the tension roller 38 is disposed between the first coating apparatus 31 and the unwinding roller 361. The method 100 further includes: releasing, by the unwinding roller 361, the substrate 40 that is not processed; providing, by the traction roller 37, traction for conveying the substrate 40; winding, by the winding roller 362, the substrate 40 processed by the rolling apparatus 33; and measuring, by the tension roller 38, tension of the substrate 40 in a conveying process, where the tension is used for adjusting a rotation speed of at least one of the unwinding roller 361, the winding roller 362, and the traction roller 37.

It can be seen that based on the feeding apparatus and substrate processing scheme in this application, the feeding apparatus makes the material fall through mechanical vibration, which improves the falling consistency of the material and allows for more even coating of the substrate in the substrate processing, thereby obtaining electrode plates with uniform thickness and flat surface and improving quality of the electrode plates.

## Claims

1. A feeding apparatus (60), wherein the feeding apparatus (60) is configured to supply a material (50) for a coating process of a substrate (40) so that the substrate (40) coated with the material (50) becomes an electrode plate; and the feeding apparatus (60) comprises:
a material conveying channel (61), wherein the material conveying channel (61) comprises a feeding inlet (611) and a discharging outlet (612), the feeding inlet (611) is closer to a first end (613) of the material conveying channel (61) than the discharging outlet (612), and the discharging outlet (612) is closer to a second end (614) of the material conveying channel (61) than the feeding inlet (611), the first end (613) and the second end (614) being two opposite ends of the material conveying channel (61); and
a vibration generator (62) disposed at the material conveying channel (61), wherein the vibration generator (62) is configured to generate mechanical vibration to induce the mechanical vibration of the feeding apparatus (60), and the material (50) entering the material conveying channel (61) through the feeding inlet (611) is conveyed to the discharging outlet (612) under action of the mechanical vibration and falls out of the feeding apparatus (60) through the discharging outlet (612) under the action of gravity;
wherein an included angle between an amplitude direction (F) of the mechanical vibration and the direction of gravity (G) and an included angle between the amplitude direction (F) of the mechanical vibration and a horizontal direction (H) are both acute angles, wherein the horizontal direction (H) is perpendicular to the direction of gravity (G), and the horizontal direction (H) is from the first end (613) to the second end (614),
**characterized in that** a value range of an included angle between an amplitude direction (F) of the mechanical vibration and the direction of gravity (G) is [20°, 70°].

2. The feeding apparatus (60) according to claim 1, **characterized in that** the feeding apparatus (60) further comprises:
a hopper (63), wherein an outlet of the hopper (63) is connected to the feeding inlet (611) so that the material (50) is added to the material conveying channel (61) through the hopper (63).

3. The feeding apparatus (60) according to claim 1 or 2, **characterized in that** the feeding apparatus (60) further comprises:
a baffle plate (64), wherein a thickness direction of the baffle plate (64) is perpendicular to the direction of gravity (G), the baffle plate (64) is disposed in a region around the discharging outlet (612) of the material conveying channel (61), and the baffle plate (64) is configured to block the material (50) falling through the discharging outlet (612).

4. The feeding apparatus (60) according to any one of claims 1 to 3, **characterized in that** the vibration generator (62) is a pulse electromagnet.

5. The feeding apparatus (60) according to any one of claims 1 to 4, **characterized in that** the material conveying channel (61) is a cuboid, the feeding inlet (611) is located at a third end (615) of the material conveying channel (61), and the discharging outlet (612) is located at a fourth end (616) of the material conveying channel (61), wherein the third end (615) and the fourth end (616) are two opposite ends of the material conveying channel (61), and both the third end (615) and the fourth end (616) are configured to connect the first end (613) and the second end (614), or **characterized in that** the material conveying channel (61) is a cylinder, the first end (613) and the second end (614) are two bottom surfaces of the cylinder, and the feeding inlet (611) and the discharging outlet (612) are both located on a side surface of the cylinder.

6. A substrate processing device (30), **characterized by** comprising:
at least one feeding apparatus (60) according to any one of claims 1 to 5; and
at least one coating apparatus configured to apply a material (50) supplied by the feeding apparatus (60) onto a substrate (40).

7. The device (30) according to claim 6, **characterized in that** the at least one feeding apparatus (60) comprises a first feeding apparatus (601), wherein the first feeding apparatus (601) is configured to drop the material (50) onto a first surface (41) of the substrate (40), the first surface (41) being perpendicular to a thickness direction of the substrate (40); and
the at least one coating apparatus comprises:
a first coating apparatus (31) configured to apply the material (50) dropped by the first feeding apparatus (601) onto the first surface (41), wherein the material (50) is used to form a first film material (51) on the first surface (41).

8. The device (30) according to claim 7, **characterized in that** the first coating apparatus (31) comprises:
a first coating roller (311) corresponding to a discharging outlet (612) of the first feeding apparatus (601); and
a second coating roller (312) disposed opposite the first coating roller (311) to apply the material (50) dropped through the discharging outlet (612) of the first feeding apparatus (601) onto the first surface (41) when the substrate (40) passes between the first coating roller (311) and the second coating roller (312), wherein the first surface (41) faces toward the discharging outlet (612) of the first feeding apparatus (601).

9. The device (30) according to claim 7 or 8, **characterized in that** the device (30) further comprises:
a first heating apparatus (34) disposed downstream of the first coating apparatus (31), wherein the first heating apparatus (34) is configured to heat up the material (50) coated on the first surface (41), so as to obtain the first film material (51).

10. The device (30) according to any one of claims 6 to 9, **characterized in that** the at least one feeding apparatus (60) comprises a second feeding apparatus (602), wherein the second feeding apparatus (602) is configured to drop the material (50) onto a roller surface of a first pressing roller (331); and
the at least one coating apparatus comprises:
a second coating apparatus (32) configured to apply the material (50) dropped by the second feeding apparatus (602) onto the roller surface of the first pressing roller (331), wherein the material (50) is used to form a second film material (52) on the roller surface of the first pressing roller (331); and
a rolling apparatus (33) disposed downstream of the second coating apparatus (32), wherein the rolling apparatus (33) comprises the first pressing roller (331) and a second pressing roller (332) disposed opposite each other; and the rolling apparatus (33) is configured to: when the substrate (40) passes between the first pressing roller (331) and the second pressing roller (332), transfer the second film material (52) from the roller surface of the first pressing roller (331) and press-fit the second film material (52) onto a second surface (42) of the substrate (40) under a pressure between the first pressing roller (331) and the second pressing roller (332), wherein the second surface (42) is perpendicular to a thickness direction of the substrate (40) and disposed opposite a first surface (41), the first surface (41) faces toward a roller surface of the second pressing roller (332), and the second surface (42) faces away from the roller surface of the second pressing roller (332).

11. The device (30) according to claim 10, **characterized in that** the rolling apparatus (33) is configured to convey the substrate (40) to between the first pressing roller (331) and the second pressing roller (332) using the second pressing roller (332).

12. The device (30) according to claim 10 or 11, **characterized in that** the device (30) further comprises:
a second heating apparatus (35) configured to heat up the material (50) coated on the roller surface of the first pressing roller (331), so as to obtain the second film material (52), preferably **characterized in that** the second heating apparatus (35) comprises:
a plurality of heating pipes (351) arranged in an arc shape around the roller surface of the first pressing roller (331).

13. The device (30) according to any one of claims 10 to 12, **characterized in that** the second coating apparatus (32) comprises:
a third coating roller (321) corresponding to a discharging outlet (612) of the second feeding apparatus (602) and disposed opposite the first pressing roller (331) to apply the material (50) dropped through the discharging outlet (612) of the second feeding apparatus (602) onto the roller surface of the first pressing roller (331) when the first pressing roller (331) and the third coating roller (321) rotate relative to each other, preferably **characterized in that** the second heating apparatus (35) comprises:
a plurality of heating pipes (351) arranged in an arc shape around the roller surface of the first pressing roller (331).

14. The device (30) according to any one of claims 10 to 13, **characterized in that** the rolling apparatus (33) is disposed downstream of the first coating apparatus (31), and the rolling apparatus (33) is further configured to: when the substrate (40) passes between the first pressing roller (331) and the second pressing roller (332), press-fit a first film material (51) onto the first surface (41) under the pressure between the first pressing roller (331) and the second pressing roller (332), preferably **characterized in that** the device (30) further comprises:
an unwinding roller (361) configured to release the substrate (40) that is not processed;
a traction roller (37) disposed between the first coating apparatus (31) and the unwinding roller (361) and configured to provide traction for conveying the substrate (40);
a winding roller (362) configured to wind the substrate (40) processed by the rolling apparatus (33); and
a tension roller (38) disposed between the first coating apparatus (31) and the unwinding roller (361) and configured to measure tension of the substrate (40) in a conveying process, wherein the tension is used for adjusting a rotation speed of at least one of the unwinding roller (361), the winding roller (362), and the traction roller (37).

## Patentansprüche

1. Zuführvorrichtung (60), wobei die Zuführvorrichtung (60) konfiguriert ist, ein Material (50) für einen Beschichtungsprozess eines Substrats (40) bereitzustellen, sodass das mit dem Material (50) beschichtete Substrat (40) zu einer Elektrodenplatte wird; und die Zuführvorrichtung (60) umfasst:
einen Materialförderkanal (61), wobei der Materialförderkanal (61) eine Zuführöffnung (611) und eine Auslassöffnung (612) umfasst, die Zuführöffnung (611) näher an einem ersten Ende (613) des Materialförderkanals (61) liegt als die Auslassöffnung (612), und die Auslassöffnung (612) näher an einem zweiten Ende (614) des Materialförderkanals (61) liegt als die Zuführöffnung (611), wobei das erste Ende (613) und das zweite Ende (614) zwei gegenüberliegende Enden des Materialförderkanals (61) sind; und
einen Vibrationsgenerator (62), der am Materialförderkanal (61) angeordnet ist, wobei der Vibrationsgenerator (62) konfiguriert ist, mechanische Vibrationen zu erzeugen, um die mechanische Vibration der Zuführvorrichtung (60) zu induzieren, und das Material (50), das durch die Zuführöffnung (611) in den Materialförderkanal (61) gelangt, wird unter Einwirkung der mechanischen Vibration zur Auslassöffnung (612) gefördert und fällt unter Einwirkung der Schwerkraft durch die Auslassöffnung (612) aus der Zuführvorrichtung (60) heraus;
wobei ein eingeschlossener Winkel zwischen einer Amplitudenrichtung (F) der mechanischen Vibration und der Schwerkraftrichtung (G) sowie ein eingeschlossener Winkel zwischen der Amplitudenrichtung (F) der mechanischen Vibration und einer Horizontalrichtung (H) jeweils spitze Winkel sind, wobei die Horizontalrichtung (H) senkrecht zur Schwerkraftrichtung (G) verläuft und die Horizontalrichtung (H) vom ersten Ende (613) zum zweiten Ende (614) verläuft,
**dadurch gekennzeichnet, dass** ein Wertebereich des eingeschlossenen Winkels zwischen der Amplitudenrichtung (F) der mechanischen Vibration und der Schwerkraftrichtung (G) [20°, 70°] beträgt.

2. Die Zuführvorrichtung (60) nach Anspruch 1, **dadurch gekennzeichnet, dass** die Zuführvorrichtung (60) ferner umfasst:
einen Trichter (63), wobei eine Auslassöffnung des Trichters (63) mit der Zuführöffnung (611) verbunden ist, sodass das Material (50) über den Trichter (63) in den Materialförderkanal (61) eingebracht wird.

3. Die Zuführvorrichtung (60) nach Anspruch 1 oder 2, **dadurch gekennzeichnet, dass** die Zuführvorrichtung (60) ferner umfasst:
eine Prallplatte (64), wobei eine Dickenrichtung der Prallplatte (64) senkrecht zur Schwerkraftrichtung (G) verläuft, die Prallplatte (64) in einem Bereich um die Auslassöffnung (612) des Materialförderkanals (61) angeordnet ist und die Prallplatte (64) konfiguriert ist, das durch die Auslassöffnung (612) fallende Material (50) zu blockieren.

4. Die Zuführvorrichtung (60) nach einem der Ansprüche 1 bis 3, **dadurch gekennzeichnet, dass** der Vibrationsgenerator (62) ein Impulselektromagnet ist.

5. Die Zuführvorrichtung (60) nach einem der Ansprüche 1 bis 4, **dadurch gekennzeichnet, dass** der Materialförderkanal (61) ein Quader ist, die Zuführöffnung (611) an einem dritten Ende (615) des Materialförderkanals (61) angeordnet ist und die Auslassöffnung (612) an einem vierten Ende (616) des Materialförderkanals (61) angeordnet ist, wobei das dritte Ende (615) und das vierte Ende (616) zwei gegenüberliegende Enden des Materialförderkanals (61) sind und sowohl das dritte Ende (615) als auch das vierte Ende (616) konfiguriert sind, das erste Ende (613) und das zweite Ende (614) zu verbinden, oder **dadurch gekennzeichnet, dass** der Materialförderkanal (61) ein Zylinder ist, das erste Ende (613) und das zweite Ende (614) zwei Bodenflächen des Zylinders sind und die Zuführöffnung (611) und die Auslassöffnung (612) beide an einer Seitenfläche des Zylinders angeordnet sind.

6. Substratbearbeitungsvorrichtung (30), **dadurch gekennzeichnet, dass** sie umfasst:
mindestens eine Zuführvorrichtung (60) nach einem der Ansprüche 1 bis 5; und
mindestens eine Beschichtungsvorrichtung, die konfiguriert ist, ein Material (50), das von der Zuführvorrichtung (60) bereitgestellt wird, auf ein Substrat (40) aufzutragen.

7. Die Vorrichtung (30) nach Anspruch 6, **dadurch gekennzeichnet, dass** die mindestens eine Zuftihrvorrichtung (60) eine erste Zuftihrvorrichtung (601) umfasst, wobei die erste Zuführvorrichtung (601) konfiguriert ist, das Material (50) auf eine erste Oberfläche (41) des Substrats (40) fallen zu lassen, wobei die erste Oberfläche (41) senkrecht zu einer Dickenrichtung des Substrats (40) verläuft; und
die mindestens eine Beschichtungsvorrichtung umfasst:
eine erste Beschichtungsvorrichtung (31), die konfiguriert ist, das von der ersten Zuführvorrichtung (601) fallengelassene Material (50) auf die erste Oberfläche (41) aufzutragen, wobei das Material (50) verwendet wird, um ein erstes Filmmaterial (51) auf der ersten Oberfläche (41) zu bilden.

8. Die Vorrichtung (30) nach Anspruch 7, **dadurch gekennzeichnet, dass** die erste Beschichtungsvorrichtung (31) umfasst:
eine erste Beschichtungswalze (311), die einer Auslassöffnung (612) der ersten Zuführvorrichtung (601) entspricht; und
eine zweite Beschichtungswalze (312), die gegenüber der ersten Beschichtungswalze (311) angeordnet ist, um das durch die Auslassöffnung (612) der ersten Zuführvorrichtung (601) fallengelassene Material (50) auf die erste Oberfläche (41) aufzutragen, wenn das Substrat (40) zwischen der ersten Beschichtungswalze (311) und der zweiten Beschichtungswalze (312) hindurchläuft, wobei die erste Oberfläche (41) der Auslassöffnung (612) der ersten Zuführvorrichtung (601) zugewandt ist.

9. Die Vorrichtung (30) nach Anspruch 7 oder 8, **dadurch gekennzeichnet, dass** die Vorrichtung (30) ferner umfasst:
eine erste Heizvorrichtung (34), die stromabwärts der ersten Beschichtungsvorrichtung (31) angeordnet ist, wobei die erste Heizvorrichtung (34) konfiguriert ist, das auf der ersten Oberfläche (41) beschichtete Material (50) zu erhitzen, um das erste Filmmaterial (51) zu erhalten.

10. Die Vorrichtung (30) nach einem der Ansprüche 6 bis 9, **dadurch gekennzeichnet, dass** die mindestens eine Zuführvorrichtung (60) eine zweite Zuführvorrichtung (602) umfasst, wobei die zweite Zuführvorrichtung (602) konfiguriert ist, das Material (50) auf eine Walzenoberfläche einer ersten Presswalze (331) fallen zu lassen; und die mindestens eine Beschichtungsvorrichtung umfasst:
eine zweite Beschichtungsvorrichtung (32), die konfiguriert ist, das von der zweiten Zuführvorrichtung (602) fallengelassene Material (50) auf die Walzenoberfläche der ersten Presswalze (331) aufzutragen, wobei das Material (50) verwendet wird, um ein zweites Filmmaterial (52) auf der Walzenoberfläche der ersten Presswalze (331) zu bilden; und
eine Walzvorrichtung (33), die stromabwärts der zweiten Beschichtungsvorrichtung (32) angeordnet ist, wobei die Walzvorrichtung (33) die erste Presswalze (331) und eine zweite Presswalze (332) umfasst, die einander gegenüber angeordnet sind; und die Walzvorrichtung (33) konfiguriert ist, wenn das Substrat (40) zwischen der ersten Presswalze (331) und der zweiten Presswalze (332) hindurchläuft, das zweite Filmmaterial (52) von der Walzenoberfläche der ersten Presswalze (331) zu übertragen und das zweite Filmmaterial (52) unter einem Druck zwischen der ersten Presswalze (331) und der zweiten Presswalze (332) auf eine zweite Oberfläche (42) des Substrats (40) aufzupressen, wobei die zweite Oberfläche (42) senkrecht zur Dickenrichtung des Substrats (40) verläuft und der ersten Oberfläche (41) gegenüberliegt, die erste Oberfläche (41) der Walzenoberfläche der zweiten Presswalze (332) zugewandt ist und die zweite Oberfläche (42) von der Walzenoberfläche der zweiten Presswalze (332) abgewandt ist.

11. Die Vorrichtung (30) nach Anspruch 10, **dadurch gekennzeichnet, dass** die Walzvorrichtung (33) konfiguriert ist, das Substrat (40) mittels der zweiten Presswalze (332) zwischen die erste Presswalze (331) und die zweite Presswalze (332) zu fördern.

12. Die Vorrichtung (30) nach Anspruch 10 oder 11, **dadurch gekennzeichnet, dass** die Vorrichtung (30) ferner umfasst:
eine zweite Heizvorrichtung (35), die konfiguriert ist, das auf der Walzenoberfläche der ersten Presswalze (331) beschichtete Material (50) zu erhitzen, um das zweite Filmmaterial (52) zu erhalten, vorzugsweise **dadurch gekennzeichnet, dass** die zweite Heizvorrichtung (35) umfasst:
eine Vielzahl von Heizrohren (351), die bogenförmig um die Walzenoberfläche der ersten Presswalze (331) angeordnet sind.

13. Die Vorrichtung (30) nach einem der Ansprüche 10 bis 12, **dadurch gekennzeichnet, dass** die zweite Beschichtungsvorrichtung (32) umfasst:
eine dritte Beschichtungswalze (321), die einer Auslassöffnung (612) der zweiten Zuführvorrichtung (602) entspricht und gegenüber der ersten Presswalze (331) angeordnet ist, um das durch die Auslassöffnung (612) der zweiten Zuführvorrichtung (602) fallengelassene Material (50) auf die Walzenoberfläche der ersten Presswalze (331) aufzutragen, wenn sich die erste Presswalze (331) und die dritte Beschichtungswalze (321) relativ zueinander drehen, vorzugsweise **dadurch gekennzeichnet, dass** die zweite Heizvorrichtung (35) umfasst:
eine Vielzahl von Heizrohren (351), die bogenförmig um die Walzenoberfläche der ersten Presswalze (331) angeordnet sind.

14. Die Vorrichtung (30) nach einem der Ansprüche 10 bis 13, **dadurch gekennzeichnet, dass** die Walzvorrichtung (33) stromabwärts der ersten Beschichtungsvorrichtung (31) angeordnet ist und die Walzvorrichtung (33) ferner konfiguriert ist, wenn das Substrat (40) zwischen der ersten Presswalze (331) und der zweiten Presswalze (332) hindurchläuft, ein erstes Filmmaterial (51) unter dem Druck zwischen der ersten Presswalze (331) und der zweiten Presswalze (332) auf die erste Oberfläche (41) aufzupressen, vorzugsweise **dadurch gekennzeichnet, dass** die Vorrichtung (30) ferner umfasst:
eine Abwickelwalze (361), konfiguriert zum Freigeben des nicht verarbeiteten Substrats (40);
eine Zugwalze (37), die zwischen der ersten Beschichtungsvorrichtung (31) und der Abwickelwalze (361) angeordnet ist und konfiguriert ist, Zugkraft für den Transport des Substrats (40) bereitzustellen;
eine Aufwickelwalze (362), konfiguriert zum Aufwickeln des durch die Walzvorrichtung (33) verarbeiteten Substrats (40); und
eine Spannungswalze (38), die zwischen der ersten Beschichtungsvorrichtung (31) und der Abwickelwalze (361) angeordnet ist und konfiguriert ist, die Spannung des Substrats (40) während des Förderprozesses zu messen, wobei die Spannung zur Anpassung einer Drehgeschwindigkeit von mindestens einer der Abwickelwalze (361), der Aufwickelwalze (362) und der Zugwalze (37) verwendet wird.

## Revendications

1. Appareil d'alimentation (60), l'appareil d'alimentation (60) étant configuré pour fournir un matériau (50) pour un procédé de revêtement d'un substrat (40) de sorte que le substrat (40) revêtu du matériau (50) devienne une plaque d'électrode ; et l'appareil d'alimentation (60) comprend :
un canal de transport de matériau (61), le canal de transport de matériau (61) comprenant une entrée d'alimentation (611) et une sortie de décharge (612), l'entrée d'alimentation (611) étant plus proche d'une première extrémité (613) du canal de transport de matériau (61) que la sortie de décharge (612), et la sortie de décharge (612) étant plus proche d'une seconde extrémité (614) du canal de transport de matériau (61) que l'entrée d'alimentation (611), la première extrémité (613) et la seconde extrémité (614) étant deux extrémités opposées du canal de transport de matériau (61) ; et
un générateur de vibrations (62) disposé sur le canal de transport de matériau (61), le générateur de vibrations (62) étant configuré pour générer des vibrations mécaniques afin d'induire la vibration mécanique de l'appareil d'alimentation (60), et le matériau (50) entrant dans le canal de transport de matériau (61) par l'entrée d'alimentation (611) étant acheminé vers la sortie de décharge (612) sous l'action de la vibration mécanique et tombant hors de l'appareil d'alimentation (60) par la sortie de décharge (612) sous l'action de la gravité ;
dans lequel un angle compris entre une direction d'amplitude (F) de la vibration mécanique et la direction de la gravité (G) ainsi qu'un angle compris entre la direction d'amplitude (F) de la vibration mécanique et une direction horizontale (H) sont tous deux des angles aigus, la direction horizontale (H) étant perpendiculaire à la direction de la gravité (G) et allant de la première extrémité (613) à la seconde extrémité (614),
**caractérisé en ce que** la plage de valeurs de l'angle compris entre la direction d'amplitude (F) de la vibration mécanique et la direction de la gravité (G) est [20°, 70°].

2. L'appareil d'alimentation (60) selon la revendication 1, **caractérisé en ce que** l'appareil d'alimentation (60) comprend en outre :
une trémie (63), dont la sortie est reliée à l'entrée d'alimentation (611) de sorte que le matériau (50) soit ajouté au canal de transport de matériau (61) par la trémie (63).

3. L'appareil d'alimentation (60) selon la revendication 1 ou 2, **caractérisé en ce que** l'appareil d'alimentation (60) comprend en outre :
une plaque de déflecteur (64), dont la direction d'épaisseur est perpendiculaire à la direction de la gravité (G), la plaque de déflecteur (64) étant disposée dans une zone autour de la sortie de décharge (612) du canal de transport de matériau (61), et la plaque de déflecteur (64) étant configurée pour bloquer le matériau (50) tombant par la sortie de décharge (612).

4. L'appareil d'alimentation (60) selon l'une quelconque des revendications 1 à 3, **caractérisé en ce que** le générateur de vibrations (62) est un électroaimant à impulsions.

5. L'appareil d'alimentation (60) selon l'une quelconque des revendications 1 à 4, **caractérisé en ce que** le canal de transport de matériau (61) est un parallélépipède, l'entrée d'alimentation (611) étant située à une troisième extrémité (615) du canal de transport de matériau (61), et la sortie de décharge (612) étant située à une quatrième extrémité (616) du canal de transport de matériau (61), les troisième et quatrième extrémités (615, 616) étant deux extrémités opposées du canal de transport de matériau (61) et configurées pour relier la première extrémité (613) et la seconde extrémité (614), ou **caractérisé en ce que** le canal de transport de matériau (61) est un cylindre, la première extrémité (613) et la seconde extrémité (614) étant deux faces inférieures du cylindre, et l'entrée d'alimentation (611) et la sortie de décharge (612) étant toutes deux situées sur une surface latérale du cylindre.

6. Dispositif de traitement de substrat (30), **caractérisé en ce qu'**il comprend :
au moins un appareil d'alimentation (60) selon l'une quelconque des revendications 1 à 5 ; et
au moins un appareil de revêtement configuré pour appliquer un matériau (50) fourni par l'appareil d'alimentation (60) sur un substrat (40).

7. Le dispositif (30) selon la revendication 6, **caractérisé en ce que** ledit dispositif comprend :
au moins un appareil d'alimentation (60) comprenant un premier appareil d'alimentation (601), le premier appareil d'alimentation (601) étant configuré pour déposer le matériau (50) sur une première surface (41) du substrat (40), ladite première surface (41) étant perpendiculaire à une direction d'épaisseur du substrat (40) ; et
au moins un appareil de revêtement comprenant :
un premier appareil de revêtement (31) configuré pour appliquer le matériau (50) déposé par le premier appareil d'alimentation (601) sur la première surface (41), le matériau (50) étant utilisé pour former un premier matériau de film (51) sur la première surface (41).

8. Le dispositif (30) selon la revendication 7, **caractérisé en ce que** le premier appareil de revêtement (31) comprend :
un premier rouleau de revêtement (311) correspondant à une sortie de décharge (612) du premier appareil d'alimentation (601) ; et
un second rouleau de revêtement (312) disposé en face du premier rouleau de revêtement (311) pour appliquer le matériau (50) déposé par la sortie de décharge (612) du premier appareil d'alimentation (601) sur la première surface (41) lorsque le substrat (40) passe entre le premier rouleau de revêtement (311) et le second rouleau de revêtement (312), la première surface (41) étant orientée vers la sortie de décharge (612) du premier appareil d'alimentation (601).

9. Le dispositif (30) selon la revendication 7 ou 8, **caractérisé en ce que** le dispositif (30) comprend en outre :
un premier appareil de chauffage (34) disposé en aval du premier appareil de revêtement (31), le premier appareil de chauffage (34) étant configuré pour chauffer le matériau (50) appliqué sur la première surface (41) afin d'obtenir le premier matériau de film (51).

10. Le dispositif (30) selon l'une quelconque des revendications 6 à 9, **caractérisé en ce que** ledit dispositif comprend :
au moins un appareil d'alimentation (60) comprenant un second appareil d'alimentation (602), le second appareil d'alimentation (602) étant configuré pour déposer le matériau (50) sur une surface de rouleau d'un premier rouleau de pressage (331) ; et
au moins un appareil de revêtement comprenant :
un second appareil de revêtement (32) configuré pour appliquer le matériau (50) déposé par le second appareil d'alimentation (602) sur la surface de rouleau du premier rouleau de pressage (331), le matériau (50) étant utilisé pour former un second matériau de film (52) sur la surface de rouleau du premier rouleau de pressage (331) ; et
un appareil de laminage (33) disposé en aval du second appareil de revêtement (32), l'appareil de laminage (33) comprenant le premier rouleau de pressage (331) et un second rouleau de pressage (332) disposés en vis-à-vis ; et l'appareil de laminage (33) étant configuré pour, lorsque le substrat (40) passe entre le premier rouleau de pressage (331) et le second rouleau de pressage (332), transférer le second matériau de film (52) depuis la surface de rouleau du premier rouleau de pressage (331) et presser le second matériau de film (52) sur une seconde surface (42) du substrat (40) sous une pression entre le premier rouleau de pressage (331) et le second rouleau de pressage (332), la seconde surface (42) étant perpendiculaire à la direction d'épaisseur du substrat (40) et disposée en face de la première surface (41), la première surface (41) étant orientée vers la surface de rouleau du second rouleau de pressage (332) et la seconde surface (42) étant orientée à l'opposé de la surface de rouleau du second rouleau de pressage (332).

11. Le dispositif (30) selon la revendication 10, **caractérisé en ce que** l'appareil de laminage (33) est configuré pour acheminer le substrat (40) entre le premier rouleau de pressage (331) et le second rouleau de pressage (332) à l'aide du second rouleau de pressage (332).

12. Le dispositif (30) selon la revendication 10 ou 11, **caractérisé en ce que** le dispositif (30) comprend en outre :
un second appareil de chauffage (35) configuré pour chauffer le matériau (50) appliqué sur la surface de rouleau du premier rouleau de pressage (331) afin d'obtenir le second matériau de film (52), de préférence **caractérisé en ce que** le second appareil de chauffage (35) comprend :
une pluralité de tubes chauffants (351) disposés en arc autour de la surface de rouleau du premier rouleau de pressage (331).

13. Le dispositif (30) selon l'une quelconque des revendications 10 à 12, **caractérisé en ce que** le second appareil de revêtement (32) comprend :
un troisième rouleau de revêtement (321) correspondant à une sortie de décharge (612) du second appareil d'alimentation (602) et disposé en face du premier rouleau de pressage (331) pour appliquer le matériau (50) déposé par la sortie de décharge (612) du second appareil d'alimentation (602) sur la surface de rouleau du premier rouleau de pressage (331) lorsque le premier rouleau de pressage (331) et le troisième rouleau de revêtement (321) tournent l'un par rapport à l'autre, de préférence **caractérisé en ce que** le second appareil de chauffage (35) comprend :
une pluralité de tubes chauffants (351) disposés en arc autour de la surface de rouleau du premier rouleau de pressage (331).

14. Le dispositif (30) selon l'une quelconque des revendications 10 à 13, **caractérisé en ce que** l'appareil de laminage (33) est disposé en aval du premier appareil de revêtement (31), et l'appareil de laminage (33) est en outre configuré pour, lorsque le substrat (40) passe entre le premier rouleau de pressage (331) et le second rouleau de pressage (332), presser un premier matériau de film (51) sur la première surface (41) sous la pression entre le premier rouleau de pressage (331) et le second rouleau de pressage (332), de préférence **caractérisé en ce que** le dispositif (30) comprend en outre :
un rouleau de déroulement (361) configuré pour libérer le substrat (40) non traité ;
un rouleau de traction (37) disposé entre le premier appareil de revêtement (31) et le rouleau de déroulement (361) et configuré pour fournir une traction pour le transport du substrat (40) ;
un rouleau d'enroulement (362) configuré pour enrouler le substrat (40) traité par l'appareil de laminage (33) ; et
un rouleau de tension (38) disposé entre le premier appareil de revêtement (31) et le rouleau de déroulement (361) et configuré pour mesurer la tension du substrat (40) pendant le processus de transport, la tension étant utilisée pour ajuster une vitesse de rotation d'au moins l'un des rouleaux de déroulement (361), d'enroulement (362) et de traction (37).
